# EUROPEAN PATENT APPLICATION

(11) **EP 4 644 200 A1**
(43) Date of publication of application: **05.11.2025**
(21) Application number: 24919139.6
(22) Date of filing: 05.02.2024
(51) Int. Cl.: B60W 20/20, B60W 40/00

(54) **CONTROL METHOD AND APPARATUS FOR DRIVE MODE OF VEHICLE, AND ELECTRONIC DEVICE AND STORAGE MEDIUM**

(30) Priority: 31.01.2024 CN 202410145202
(71) Applicant: Chongqing Changan Automobile Co., Ltd., Chongqing 400023 (CN)
(72) Inventor: FU, Xuehai, Chongqing 400023 (CN); HU, Xianli, Chongqing 400023 (CN)
(74) Representative: Keller Schneider Patent- und Markenanwälte AG
(86) International application number: PCT/CN2024/076080
(87) International publication number: WO 2025/161048

(57) **Abstract**

The present application relates to the technical field of vehicle control, and discloses a control method and apparatus for drive modes of a vehicle, an electronic device, and a storage medium. The method includes: acquiring a target condition currently used by a target vehicle to determine whether to enter a pure electric drive mode; acquiring key parameters related to the target condition, and if the key parameters meet the target condition, controlling the target vehicle to enter the pure electric drive mode, and determining, based on vehicle parameters and environmental parameters, a target battery charge quantity for exiting the pure electric drive mode; and if the target vehicle reaches the target battery charge quantity, controlling the target vehicle to exit the pure electric drive mode. In the present application, the target condition for entering the pure electric drive mode and the battery charge quantity for exiting the pure electric drive mode are determined based on the current vehicle parameters and environmental parameters of the target vehicle, to implement more accurate control to enter and exit the pure electric drive mode in different cases, thereby improving the control effect of the pure electric drive mode, and avoiding the problem of frequent switching of vehicle modes.

## Description

### Technical field

The present application relates to the field of vehicle control, and specifically to a control method and apparatus for drive modes of a vehicle, an electronic device, and a storage medium.

### Background

A hybrid electric vehicle enters a pure electric drive mode via activation of a switch, and determines whether the actual value of a current state of charge (SoC) of a battery is greater than a set threshold. If conditions are met, the vehicle enters the pure electric drive mode. However, there are two cases of exiting the pure electric drive mode. First, the vehicle exits the pure electric drive mode based on a fixed SoC threshold, that is to say, when the SoC of the battery reaches the set threshold. Next, if an engine needs to be activated due to a power requirement, the vehicle also exits the pure electric drive mode in advance. Due to the presence of these conditions, the hybrid electric vehicle may frequently switch between the pure electric drive mode and a hybrid drive mode, which causes frequent switching of vehicle modes, leading to degraded driving experience. In addition, in the pure electric drive mode, the all-electric range of the vehicle is not dynamically adjusted based on a battery status, which may compromise the driving experience of a driver. In addition, after the vehicle exits the pure electric drive mode, the engine generates significant noise. This also adversely affects the driving experience of the driver.

### Summary

In view of this, embodiments of the present application provide a control method and apparatus for drive modes of a vehicle, an electronic device, and a storage medium, to solve the problem that a hybrid electric vehicle may frequently switch between a pure electric drive mode and a hybrid drive mode, which causes frequent switching of vehicle modes, leading to degraded driving experience.

According to a first aspect, embodiments of the present application provide a control method for drive modes of a vehicle. The method includes:
acquiring a target condition currently used by a target vehicle to determine whether to enter a pure electric drive mode, where the target condition is determined by using current vehicle parameters and environmental parameters of the target vehicle;
acquiring key parameters related to the target condition, and if the key parameters meet the target condition, controlling the target vehicle to enter the pure electric drive mode, and determining, based on the vehicle parameters and the environmental parameters, a target battery charge quantity for exiting the pure electric drive mode; and
if the target vehicle reaches the target battery charge quantity, controlling the target vehicle to exit the pure electric drive mode.

In the embodiments of the present application, the step of acquiring a target condition currently used by a target vehicle to determine whether to enter a pure electric drive mode includes:
detecting the vehicle parameters of the target vehicle and the environmental parameters of an environment in which the target vehicle is currently located, where the vehicle parameters at least include at least one of a battery state of health, a cell voltage, and a thermal management system status, and the environmental parameters include an ambient temperature and an altitude coefficient;
acquiring an initial condition used for determining whether to enter the pure electric drive mode, and extracting determination rules corresponding to key parameters in the initial condition; and
updating the determination rules corresponding to the key parameters by using the vehicle parameters and the environmental parameters to obtain the target condition.

In the embodiments of the present application, the step of determining, based on the vehicle parameters and the environmental parameters, a target battery charge quantity for exiting the pure electric drive mode includes:
determining a current battery status based on the battery state of health and the cell voltage, and acquiring a first impact factor of the current battery status on a battery charge quantity;
determining a current environmental status based on the ambient temperature and the altitude coefficient, and acquiring a second impact factor of the current environmental status on the battery charge quantity;
acquiring a third impact factor of the thermal management system status on the battery charge quantity;
calculating a charge quantity correction value by using the first impact factor, the second impact factor, and the third impact factor; and
correcting an initial battery charge quantity by using the charge quantity correction value to obtain the target battery charge quantity, where the initial battery charge quantity is a preset battery charge quantity for exiting the pure electric drive mode.

In the embodiments of the present application, the step of calculating a charge quantity correction value by using the first impact factor, the second impact factor, and the third impact factor includes:
acquiring a first weight corresponding to the first impact factor, a second weight corresponding to the second impact factor, and a third weight corresponding to the third impact factor;
calculating a first product of the first impact factor and the first weight;
calculating a second product of the second impact factor and the second weight;
calculating a third product of the third impact factor and the third weight; and
determining the charge quantity correction value based on a sum value of the first product, the second product, and the third product.

In the embodiments of the present application, after the step of controlling the target vehicle to exit the pure electric drive mode, the method further includes:
acquiring an actual SoC value of a battery in the target vehicle, and calculating a target SoC value by using the actual SoC value;
searching a preset MAP table for a preset SoC value related to the target SoC value;
calculating an SoC difference between the preset SoC value and the target SoC value; and
correcting an engine speed and an engine torque of the target vehicle by using the SoC difference.

In the embodiments of the present application, the step of correcting an engine speed and an engine torque of the target vehicle by using the SoC difference includes:
comparing the SoC difference with a preset SoC threshold; and
if the SoC difference is greater than the preset SoC threshold, correcting the engine speed and the engine torque based on a first correction parameter; or if the SoC difference is less than the preset SoC threshold, correcting the engine speed and the engine torque based on a second correction parameter.

In the embodiments of the present application, after the step of calculating an SoC difference between the preset SoC value and the target SoC value, the method further includes:
acquiring an initial SoC increase rate of the battery based on the SoC difference;
acquiring a maximum SoC increase rate and a minimum SoC increase rate;
limiting the initial SoC increase rate by using the maximum SoC increase rate and the minimum SoC increase rate to obtain a target SoC increase rate; and
adjusting the target SoC value according to the target SoC increase rate until the preset SoC value is reached.

According to a second aspect, embodiments of the present application provide a control apparatus for drive modes of a vehicle. The apparatus includes:
a detection module, configured to detect a battery assembly parameter of a target vehicle, and correcting, based on the battery assembly parameter, a preset condition for the vehicle to determine whether to enter a pure electric drive mode;
an acquisition module, configured to acquire key parameters related to the preset condition, and if the key parameters meet the preset condition, control the target vehicle to enter the pure electric drive mode, and determine, based on vehicle parameters and environmental parameters, a target battery charge quantity for exiting the pure electric drive mode; and
a control module, configured to: if the target vehicle reaches the target battery charge quantity, control the target vehicle to exit the pure electric drive mode.

According to a third aspect, embodiments of the present application provide an electronic device, including: a memory and a processor, where the memory and the processor are communicatively connected to each other, the memory has computer instructions stored therein, and the processor is configured to perform the foregoing method of the first aspect or any corresponding embodiment thereof by executing the computer instructions.

According to a fourth aspect, embodiments of the present application provide a computer-readable storage medium, where the computer-readable storage medium has computer instructions stored therein, and the computer instructions are configured to enable a computer to perform the foregoing method of the first aspect or any corresponding embodiment thereof.

The embodiments of the present application have the following beneficial effects:
In the method provided in the embodiments of the present application, a target condition is determined by using current vehicle parameters and environmental parameters of a target vehicle. Therefore, whether to enter a pure electric drive mode may be accurately determined based on real-time data. A current drive mode requirement of the vehicle can be reflected more accurately, thereby improving the precision of control. In addition, because the target condition for entering the pure electric drive mode and a battery charge quantity for exiting the pure electric drive mode are determined based on the current vehicle parameters and environmental parameters of the target vehicle, more accurate control to enter and exit the pure electric drive mode in different cases is implemented, thereby improving the control effect of the pure electric drive mode, and avoiding the problem of frequent switching of vehicle modes.

In the embodiments of the present application, a current battery status and environmental status are determined based on factors such as a battery state of health, a cell voltage, an ambient temperature, and an altitude coefficient, and a thermal management system status is combined, so that the impacts of the factors on the battery charge quantity can be more accurately assessed, and subsequently a charge quantity correction value is calculated more accurately, thereby improving the accuracy of charge quantity correction. In addition, the impacts of multiple factors such as the battery state of health, the cell voltage, the ambient temperature, the altitude coefficient, and the thermal management system status on the battery charge quantity are incorporated. In this way, the actual situations of the battery and the environment can be assessed more comprehensively, and a charge quantity value can be corrected more comprehensively, thereby improving the reliability of a correction result. A corrected target battery charge quantity can guide the charging and discharging strategies of the battery more accurately, and extend the service life of the battery, thereby improving the use efficiency and the reliability of the battery.

In the embodiments of the present application, through the correction of the speed and torque of an engine, the energy in the battery of the vehicle can be better managed and utilized. After the vehicle exits the pure electric drive mode, the speed and torque of the engine may be adjusted based on the current status and requirement of the battery to save power supply, thereby achieving a long battery range. In addition, through the correction of the speed and torque of the engine, the relationship between the power preservation of the battery and the sound quality of the vehicle can be coordinated. In the pure electric drive mode, the vehicle has low sound, and the driving experience is more silent. When the system needs to activate the engine for power supply, through suitable adjustment of the speed and torque of the engine, the sound quality of the vehicle has smoother and more harmonious transitions, thereby providing better driving experience. In addition, the system can control the operating status of the engine more accurately, so that the power supply transition of the engine is smoother and more seamless. In this way, comfortable driving experience can be provided, to enable a driver to perceive no significant vibration when the vehicle exits the pure electric drive mode.

### Brief Description of the Drawings

To describe the technical solutions in specific embodiments of the present application or the prior art more clearly, the following briefly introduces the accompanying drawings required for describing the specific embodiments or the prior art. Apparently, the accompanying drawings in the following description show some embodiments of the present application, and a person of ordinary skill in the art may still derive other drawings from these accompanying drawings without creative efforts.
FIG. 1 is a schematic flowchart of a control method for drive modes of a vehicle according to some embodiments of the present application;
FIG. 2 is a schematic flowchart of a control method for drive modes of a vehicle according to some embodiments of the present application;
FIG. 3 is a structural block diagram of a control apparatus for drive modes of a vehicle according to an embodiment of the present application; and
FIG. 4 is a schematic diagram of a hardware structure of an electronic device according to an embodiment of the present application.

### Detailed Description

To make the objectives, technical solutions, and advantages of embodiments of the present application clearer, the following clearly and completely describes the technical solutions in embodiments of the present application with reference to the accompanying drawings in embodiments of the present application. It is clear that the described embodiments are merely some rather than all of embodiments of the present application. All other embodiments obtained by persons skilled in the art based on embodiments of the present application without creative efforts shall fall within the scope of protection of the present application.

According to embodiments of the present application, a control method and apparatus for drive modes of a vehicle, an electronic device, and a storage medium are provided. It needs to be noted that the steps illustrated in the flowchart of the accompanying drawings may be performed in a computer system such as a set of computer-executable instructions, and that, although a logical sequence is shown in the flowchart, in some cases the steps shown or described may be performed in an order different from that shown herein.

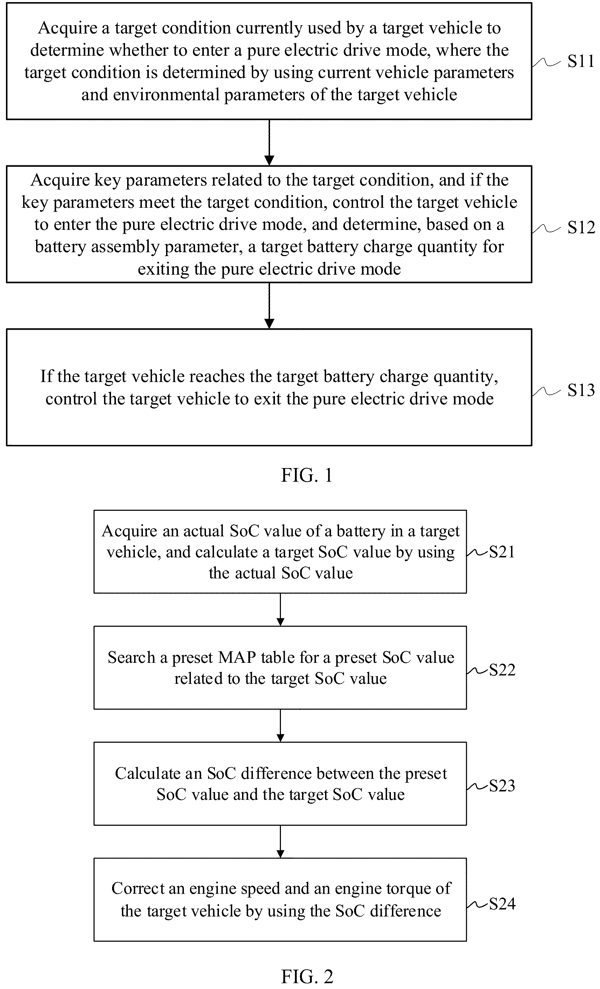

This embodiment provides a control method for drive modes of a vehicle. FIG. 1 is a flowchart of a control method for drive modes of a vehicle according to an embodiment of the present application. As shown in FIG. 1, the procedure includes the following steps.

Step S11. Acquire a target condition currently used by a target vehicle to determine whether to enter a pure electric drive mode, where the target condition is determined by using current vehicle parameters and environmental parameters of the target vehicle.

In the embodiments of the present application, to ensure that the operation of the pure electric drive mode meets a use scenario of a user and prevent frequent entry and exit, after an initial condition for the vehicle to enter the pure electric drive mode is set, multiple factors are further incorporated to correct the initial condition. The multiple factors include vehicle parameters and environmental parameters.

Specifically, the step of acquiring a target condition currently used by a target vehicle to determine whether to enter a pure electric drive mode includes the following steps A1 to A3.

Step A1. Detect the vehicle parameters of the target vehicle and the environmental parameters of an environment in which the target vehicle is currently located, where the vehicle parameters at least include at least one of a battery state of health, a cell voltage, and a thermal management system status, and the environmental parameters include an ambient temperature and an altitude coefficient.

In the embodiments of the present application, in the vehicle parameters, for the battery state of health, the performance and the service life condition of a battery is assessed and the future available energy of the battery is predicted by monitoring indicators such as the capacity, internal resistance, and voltage of the battery. For the cell voltage, the status of a battery pack including a charging state, a discharging state, balancing, and the like is determined by monitoring the cell voltage in an electric vehicle. For the thermal management system status, a thermal management system of the electric vehicle including temperature sensors, radiators, coolants, and the like is monitored to ensure that the vehicle operates within an optimal temperature range, thereby preventing overheating or excessive cooling.

In the environmental parameters, for the ambient temperature, temperature information of the environment in which the target vehicle is located is acquired through equipment such as temperature sensors or a weather station, to assess the impacts of the ambient temperature on the performance of the vehicle and the battery. For the altitude coefficient, the altitude coefficient is calculated based on the altitude of the position of the vehicle, to adjust performance parameters such as engine power and oxygen supply of the vehicle.

Step A2. Acquire an initial condition used for determining whether to enter the pure electric drive mode, and extract determination rules corresponding to key parameters in the initial condition.

In the embodiments of the present application, the key parameters in the initial condition may be a battery SoC value, a battery power output, the ambient temperature, and the like. The determination rules corresponding to the key parameters are as follows:
For a battery SoC, it is determined whether the remaining charge quantity of the battery is sufficient to enter the pure electric drive mode. For example, when the battery SoC is greater than 80%, it may be determined that the charge quantity is sufficient for the vehicle to enter the pure electric drive mode.

For the battery power output, whether the pure electric drive mode can be supported is determined based on the power output capability of the battery. For example, when the output power of the battery reaches a specific level, the vehicle may enter the pure electric drive mode.

For the ambient temperature, the impact of the ambient temperature on the performance of the battery is taken into consideration. For example, when the ambient temperature is within the range of 20 degrees Celsius to 35 degrees Celsius, the vehicle may enter the pure electric drive mode.

It needs to be noted that these rules and parameters may be adjusted and customized according to actual requirements and specific conditions. A vehicle control system performs determination according to these rules and parameters, and performs update based on real-time vehicle parameters and environmental parameters to obtain the target condition to determine whether to enter the pure electric drive mode.

Step A3. Update the determination rules corresponding to the key parameters by using the vehicle parameters and the environmental parameters to obtain the target condition.

Step S12. Acquire key parameters related to the target condition, and if the key parameters meet the target condition, control the target vehicle to enter the pure electric drive mode, and determine, based on the vehicle parameters and the environmental parameters, a target battery charge quantity for exiting the pure electric drive mode.

In the embodiments of the present application, the step of determining, based on the vehicle parameters and the environmental parameters, a target battery charge quantity for exiting the pure electric drive mode includes the following steps B1 to B5.

Step B1. Determine a current battery status based on the battery state of health and the cell voltage, and acquire a first impact factor of the current battery status on a battery charge quantity.

Specifically, when a battery state of health value is higher, it represents that the performance and capacity of the battery degrade less, and the battery status is better. The cell voltage is one of the key indicators for determining the battery status. A higher cell voltage represents a higher charge quantity. The current battery status may be determined by combining the battery state of health and the cell voltage. For example, in a case where the state of health is high and the cell voltage is high, it may be determined that the battery status is good. Based on different combinations of the state of health and the cell voltage, different states such as excellent, normal, and poor states of the battery status may be determined. Based on the determined current battery status, the impact of the status on the battery charge quantity may be determined. For example, a battery in a good state usually has a high charge quantity, and a battery in a poor state may have a low charge quantity. The first impact factor of the current battery status on the battery charge quantity may be obtained based on historical data and model calculation.

For example, the historical data is collected. Battery status data and charge quantity data within a past period of time are collected from a battery monitoring system. These data include a battery state of health, a cell voltage, a charging/ discharging rate, and the like. A mathematical model may be established based on the collected historical data to describe a relationship for the impact of the battery status on the battery charge quantity. This model may be established based on statistical analysis, machine learning or other related methods. The established model is trained and validated by using the historical data. It is ensured by adjusting the parameters of the model and assessing the accuracy of the model that the model can fit past data.

Based on the trained model, prediction and calculation are performed by using current battery status data. The model may predict the impact of the current battery status on the battery charge quantity based on the current information such as the state of health and the cell voltage of the battery. Based on a prediction result of the model, the first impact factor of the current battery status on the battery charge quantity may be obtained.

Step B2. Determine a current environmental status based on the ambient temperature and the altitude coefficient, and acquire a second impact factor of the current environmental status on the battery charge quantity.

In the embodiments of the present application, the current environmental status may be determined by combining the ambient temperature and the altitude coefficient. For example, in a case where the temperature is high and the altitude is high, it may be determined that the current environmental status is a high-temperature high-altitude state. Based on different combinations of the ambient temperature and the altitude coefficient, different states such as a low-temperature low-altitude state and a high-temperature low-altitude state of the environmental status may be determined. Based on the determined current environmental status, the impact of the status on the battery charge quantity may be determined. For example, when the environmental status is a high-temperature high-altitude state, the charge quantity of the battery may be consumed faster. The second impact factor of the current environmental status on the battery charge quantity may be obtained by analyzing historical data and establishing a corresponding model.

For example, the historical data is collected. Environmental data and battery charge quantity data within a past period of time are collected from the battery monitoring system. The environmental data includes an ambient temperature, an altitude, and the like. A mathematical model may be established based on the collected historical data to describe a relationship for the impact of the environmental status on the battery charge quantity. This model may be established based on statistical analysis, machine learning or other related methods. The established model is trained and validated by using the historical data. It is ensured by adjusting the parameters of the model and assessing the accuracy of the model that the model can fit past data.

Based on the trained model, prediction and calculation are performed by using current environmental status data. The model may predict the impact of the current environmental status on the battery charge quantity based on current information such as the ambient temperature and the altitude. Based on a prediction result of the model, the second impact factor of the current environmental status on the battery charge quantity may be obtained.

Step B3. Acquire a third impact factor of the thermal management system status on the battery charge quantity.

In the embodiments of the present application, the thermal management system status and the battery charge quantity data within a past period of time are collected. These data may include changes of the battery charge quantity in different states of the thermal management system status. A mathematical model may be established based on the collected data to describe a relationship for the impact of the thermal management system status on the battery charge quantity. The model may take changes of the battery temperature and losses of the charge quantity in different states of the thermal management system status into consideration. The established model is trained and validated by using the historical data. It is ensured by adjusting the parameters of the model and assessing the accuracy of the model that the model can fit past data.

Based on the trained model, prediction and calculation are performed by using current thermal management system status data. The model may predict the impact of the current thermal management system status on the battery charge quantity based on current information such as a current radiator temperature, a coolant temperature, and a fan rotational speed. Based on a prediction result of the model, the third impact factor of the current thermal management system status on the battery charge quantity may be obtained.

Step B4. Calculate a charge quantity correction value by using the first impact factor, the second impact factor, and the third impact factor.

In the embodiments of the present application, the step of calculating a charge quantity correction value by using the first impact factor, the second impact factor, and the third impact factor includes: acquiring a first weight corresponding to the first impact factor, a second weight corresponding to the second impact factor, and a third weight corresponding to the third impact factor; calculating a first product of the first impact factor and the first weight; calculating a second product of the second impact factor and the second weight; calculating a third product of the third impact factor and the third weight; and determining the charge quantity correction value based on a sum value of the first product, the second product, and the third product.

Step B5. Correct an initial battery charge quantity by using the charge quantity correction value to obtain the target battery charge quantity, where the initial battery charge quantity is a preset battery charge quantity for exiting the pure electric drive mode.

In the embodiments of the present application, the initial battery charge quantity for exiting the pure electric drive mode is acquired from a battery management system. A sum of the initial battery charge quantity and the charge quantity correction value is calculated to obtain the corrected target battery charge quantity.

As an example, it is assumed that the impact factor of the battery state of health on the battery charge quantity is 0.6, the impact factor of the ambient temperature and the altitude coefficient on the battery charge quantity is 0.3, and the impact factor of the thermal management system status on the battery charge quantity is 0.1. Based on the foregoing weights, it is assumed that an initial battery charge quantity of one electric vehicle is 50%.

A correction value is calculated based on the first impact factor of the battery state of health and the cell voltage. It is assumed that the first impact factor is -5% (representing that the battery state of health and the cell voltage cause a decrease in the charge quantity), and the weight of the first impact factor is 0.6. The correction value of the first impact factor is -5% × 0.6 = -3%.

A correction value is calculated based on the second impact factor of the ambient temperature and the altitude. It is assumed that the second impact factor is -2% (representing that the ambient temperature and the altitude cause a decrease in the charge quantity), and the weight of the second impact factor is 0.3. The correction value of the second impact factor is -2% × 0.3 = -0.6%.

A correction value is calculated based on the third impact factor of the thermal management system status. It is assumed that the third impact factor is 1% (representing that the thermal management system status causes an increase in the charge quantity), and the weight of the third impact factor is 0.1. The correction value of the third impact factor is 1% × 0.1 = 0.1%.

Finally, all the correction values are added to obtain a total correction value: -3% + (-0.6%) + 0.1% = -3.5%. The initial battery charge quantity is corrected by using the total correction value: Corrected Charge Quantity = Initial Battery Charge Quantity + Total Correction Value. Assuming that the initial battery charge quantity is 50%, the corrected charge quantity is 50% + (-3.5%) = 46.5%.

In the embodiments of the present application, a current battery status and environmental status are determined based on factors such as a battery state of health, a cell voltage, an ambient temperature, and an altitude coefficient, and a thermal management system status is combined, so that the impacts of the factors on the battery charge quantity can be more accurately assessed, and subsequently a charge quantity correction value is calculated more accurately, thereby improving the accuracy of charge quantity correction. In addition, the impacts of multiple factors such as the battery state of health, the cell voltage, the ambient temperature, the altitude coefficient, and the thermal management system status on the battery charge quantity are incorporated. In this way, the actual situations of the battery and the environment can be assessed more comprehensively, and a charge quantity value can be corrected more comprehensively, thereby improving the reliability of a correction result. A corrected target battery charge quantity can guide the charging and discharging strategies of the battery more accurately, and extend the service life of the battery, thereby improving the use efficiency and the reliability of the battery.

Step S13: If the target vehicle reaches the target battery charge quantity, control the target vehicle to exit the pure electric drive mode.

In the embodiments of the present application, if the target vehicle reaches the target battery charge quantity, it indicates that the battery of the target vehicle has been charged to a preset target charge quantity. In this case, measures may be adopted to make the target vehicle exit the pure electric drive mode, that is, stop depending on the power supply of the battery for driving.

A specific exit control strategy may be designed based on actual situations. The following provides some possible control strategies: Switch to a hybrid power mode: If the target vehicle is a hybrid electric vehicle, the control strategy may be switched to a hybrid power mode. The hybrid electric vehicle may determine whether to use a fuel engine or an electric motor for driving based on the battery charge quantity and a driving requirement, to provide power in an optimal manner.

Switch to a fuel drive mode: If the target vehicle has no hybrid power system or the battery charge quantity is sufficient, the control strategy may be switched to a fuel drive mode. In this case, the vehicle depends on the fuel engine for power supply instead of depending on the battery. In this case, the vehicle depends on the fuel engine for the supply of power instead of depending on the battery.

Stop battery charging: If the target vehicle is a plug-in hybrid electric vehicle or a pure electric vehicle, the vehicle may exit the pure electric drive mode by stopping battery charging. This means that the vehicle stops charging the battery with a charging pile or another external power source, but instead uses an internal engine or other driving system for the supply of power.

In the method provided in the embodiments of the present application, a target condition is determined by using current vehicle parameters and environmental parameters of a target vehicle. Therefore, whether to enter a pure electric drive mode may be accurately determined based on real-time data. A current drive mode requirement of the vehicle can be reflected more accurately, thereby improving the precision of control. In addition, because the target condition for entering the pure electric drive mode and a battery charge quantity for exiting the pure electric drive mode are determined based on the current vehicle parameters and environmental parameters of the target vehicle, more accurate control to enter and exit the pure electric drive mode in different cases is implemented, thereby improving the control effect of the pure electric drive mode, and avoiding the problem of frequent switching of vehicle modes.

FIG. 2 is a flowchart of a control method for drive modes of a vehicle according to an embodiment of the present application. As shown in FIG. 2, the method further include the following steps.

Step S21. Acquire an actual SoC value of a battery in the target vehicle, and calculate a target SoC value by using the actual SoC value.

In the embodiments of the present application, the actual SoC value of the battery in the target vehicle is acquired. Related information of the battery in the vehicle may be read by using a battery management system (BMS). The BMS is a system configured to monitor, control, and protect batteries, and usually provides SoC values and other related parameters of the batteries. After the actual SoC value of the battery in the target vehicle is acquired through the BMS, the target SoC value may by calculated by using the value. The target SoC value may be calculated through the following formula:
Target SoC Value = Actual SoC Value + (Target Charge Quantity - Actual Stored Charge)/Rated Capacity × 100%. The target charge quantity is a charge quantity that is expected to reach, the actual stored charge is a charge quantity that is actually stored in the battery currently. The rated capacity is the rated capacity of the battery. Through the formula, the target SoC value may be adjusted based on a difference between the target charge quantity and the actual stored charge.

Step S22. Search a preset MAP table for a preset SoC value related to the target SoC value.

In the embodiments of the present application, the search of the preset MAP table for the preset SoC value related to the target SoC value may facilitate the determination of an expected status corresponding to the target SoC value. The preset MAP table is a table established based on historical data or experience, and records preset SoC values under specific SoC values. Specific steps are as follows. First, a preset MAP table needs to be prepared. The table should contain two columns of data. Known SoC values are provided in one column, and corresponding preset SoC values are provided in the other column. According to an actual requirement, a suitable SoC value range and a preset SoC value may be selected. A known SoC value that is the closest to or is close to the target SoC value is found in the preset MAP table. The closest SoC value may be found by using a search algorithm, for example, linear interpolation or nearest-neighbor interpolation. When the closest known SoC value is found, a corresponding preset SoC value may be found. This value may be used as the expected status of the target SoC value.

As an example, it is assumed that the target SoC value is 50%, and known SoC values and preset SoC values corresponding thereto in the preset MAP table are as follows:

**Table 1-Preset MAP table**

| Known SoC value (%) | Preset SoC value (%) |
|---|---|
| 20 | 30 |
| 40 | 45 |
| 60 | 55 |
| 80 | 75 |

Based on the target SoC value of 50%, the closest known SoC values may be found to be 40% and 60%, with corresponding preset SoC values of 45% and 55%, respectively. According to the preset MAP table, it may be determined that the preset SoC value corresponding to the target SoC value of 50% is a value between 45% and 55%, and the selection of a specific value may be determined according to an actual requirement and algorithm.

Step S23. Calculate an SoC difference between the preset SoC value and the target SoC value.

In the embodiments of the present application, SoC Difference = Target SoC Value - Preset SoC Value. The SoC difference represents a difference between the target SoC value and the preset SoC value.

Step S24. Correct an engine speed and an engine torque of the target vehicle by using the SoC difference.

In the embodiments of the present application, the step of correcting an engine speed and an engine torque of the target vehicle by using the SoC difference includes the following steps C1 and C2.

Step C1. Compare the SoC difference with a preset SoC threshold.

Step C2. If the SoC difference is greater than the preset SoC threshold, correct the engine speed and the engine torque based on a first correction parameter; or if the SoC difference is less than the preset SoC threshold, correct the engine speed and the engine torque based on a second correction parameter.

Specifically, the SoC difference is compared with the preset SoC threshold. If the SoC difference exceeds the preset SoC threshold, it represents that the target SoC value and the preset SoC value have a large difference. The engine speed is adjusted based on a preset correction parameter, and the speed may be increased or reduced, to adapt to the difference from the target SoC value. Similarly, the engine torque is adjusted based on the preset correction parameter, and the torque may be increased or reduced, to adapt to the difference from the target SoC value.

For example, it is assumed that the preset SoC threshold is 10%, the target SoC value is 60%, and currently the actual SoC value is 40%. In this case, the SoC difference is 60% - 40% = 20%, and exceeds the preset SoC threshold. The engine speed and the engine torque may be adjusted based on the preset correction parameter, to adapt to the difference from the target SoC value. The engine speed is corrected based on the first correction parameter: increasing the speed. The correction method includes suitably increasing the throttle opening or using transmission control strategies to improve the speed output of the engine. The engine torque is corrected based on the first correction parameter: increasing the torque. The correction method includes increasing a fuel injection quantity, adjusting ignition timing or enhancing turbocharger efficiency to increase the torque output of the engine.

If the SoC difference does not exceed the preset SoC threshold, it represents that the difference between the target SoC value and the preset SoC value is small. The engine speed is fine-tuned based on the preset second correction parameter to bring the engine speed closer to the preset value. Similarly, the engine torque is fine-tuned based on the preset second correction parameter to adapt to a slight difference from the target SoC value.

For example, it is assumed that the preset SoC threshold is 5%, the target SoC value is 60%, and currently the actual SoC value is 58%. In this case, the SoC difference is 60% - 58% = 2%, and does not exceed the preset SoC threshold. The engine speed and the engine torque may be fine-tuned based on the preset second correction parameter, to adapt to the slight difference from the target SoC value. The engine speed is fine-tuned based on the second correction parameter to bring the engine speed closer to the preset value. The fine-tuning method includes fine-tuning the throttle opening or fine-tuning transmission control strategies to fine-tune the speed output of the engine. The engine torque is fine-tuned based on the second correction parameter to adapt to a slight difference from the target SoC value. The fine-tuning method includes fine-tuning a fuel injection quantity, fine-tuning ignition timing or fine-tuning turbocharger efficiency to fine-tune the torque output of the engine.

In the embodiments of the present application, through the correction of the speed and torque of an engine, the energy in the battery of the vehicle can be better managed and utilized. After the vehicle exits the pure electric drive mode, the speed and torque of the engine may be adjusted based on the current status and requirement of the battery to save power supply, thereby achieving a long battery range. In addition, through the correction of the speed and torque of the engine, the relationship between the power preservation of the battery and the sound quality of the vehicle can be coordinated. In the pure electric drive mode, the vehicle has low sound, and the driving experience is more silent. When the system needs to activate the engine for power supply, through suitable adjustment of the speed and torque of the engine, the sound quality of the vehicle has smoother and more harmonious transitions, thereby providing better driving experience. In addition, the system can control the operating status of the engine more accurately, so that the power supply transition of the engine is smoother and more seamless. In this way, comfortable driving experience can be provided, to enable a driver to perceive no significant vibration when the vehicle exits the pure electric drive mode.

In the embodiments of the present application, after the step of calculating an SoC difference between the preset SoC value and the target SoC value, the method further includes: acquiring an initial SoC increase rate of the battery based on the SoC difference; acquire a maximum SoC increase rate and a minimum SoC increase rate; limiting the initial SoC increase rate by using the maximum SoC increase rate and the minimum SoC increase rate to obtain a target SoC increase rate; and adjusting the target SoC value according to the target SoC increase rate until the preset SoC value is reached.

Specifically, the SoC increase rate of the battery is determined based on the calculated SoC difference in a table look-up manner. Based on different SoC differences, the values of corresponding increase rates are obtained through table look-up. To ensure the normal operation and safety of the battery, the limitations of the maximum SoC increase rate and the minimum SoC increase rate are set. The SoC increase rate of the battery cannot exceed the maximum SoC increase rate and cannot be lower than the minimum SoC increase rate.

Finally, the adjustment is performed based on the currently set target SoC through the calculated SoC increase rate. The adjustment direction is constrained to upward-only variation, that is, increasing the SoC value, and cannot be downward variation, that is, decreasing the SoC value. The adjustment stops when the target SoC reaches the value of a difference SoC in a basic MAP table. In this way, it can be ensured that the SoC value is stably increased within the operating range of the battery to reach the set target SoC value.

This embodiment further provides a control apparatus for drive modes of a vehicle. The apparatus is configured to implement the foregoing embodiments and optional embodiments, and content that has been described is no longer repeated. As used herein, the term "module" refers to a combination of software and/or hardware configured to implement a predetermined function. Although the apparatus described in the following embodiments is preferably implemented in software, implementation via hardware, or a combination of software and hardware is also possible and contemplated.

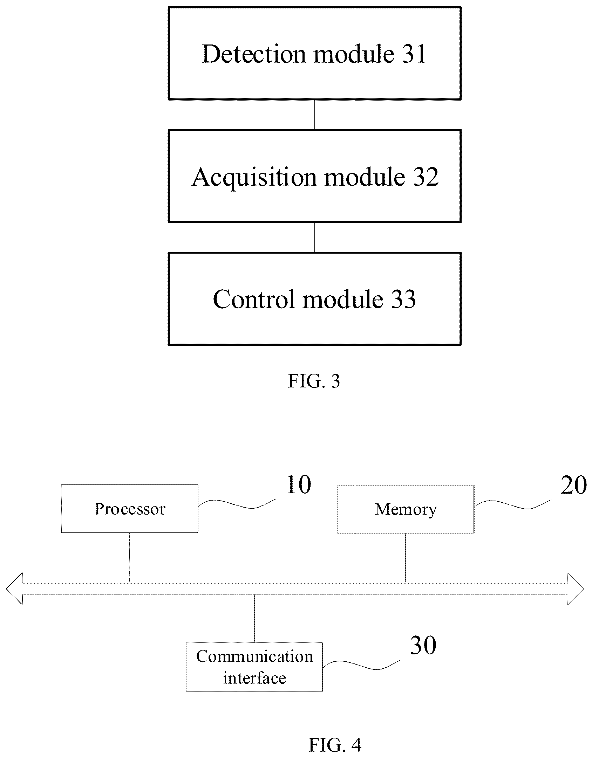

This embodiment provides a control apparatus for drive modes of a vehicle. As shown in FIG. 3, the apparatus includes:
a detection module 31, configured to detect a battery assembly parameter of a target vehicle, and correcting, based on the battery assembly parameter, a preset condition for the vehicle to determine whether to enter a pure electric drive mode;
an acquisition module 32, configured to acquire key parameters related to the preset condition, and if the key parameters meet the preset condition, control the target vehicle to enter the pure electric drive mode, and determine, based on a battery assembly parameter, a target battery charge quantity for exiting the pure electric drive mode;
a control module 33, configured to: if the target vehicle reaches the target battery charge quantity, control the target vehicle to exit the pure electric drive mode.

In the embodiments of the present application, the detection module is configured to: detect the vehicle parameters of the target vehicle and the environmental parameters of an environment in which the target vehicle is currently located, where the vehicle parameters at least include at least one of a battery state of health, a cell voltage, and a thermal management system status, and the environmental parameters include an ambient temperature and an altitude coefficient; acquire an initial condition used for determining whether to enter the pure electric drive mode, and extract determination rules corresponding to key parameters in the initial condition; and update the determination rules corresponding to the key parameters by using the vehicle parameters and the environmental parameters to obtain the target condition.

In the embodiments of the present application, the acquisition module is configured to: determine a current battery status based on the battery state of health and the cell voltage, and acquire a first impact factor of the current battery status on a battery charge quantity; determine a current environmental status based on the ambient temperature and the altitude coefficient, and acquire a second impact factor of the current environmental status on the battery charge quantity; acquire a third impact factor of the thermal management system status on the battery charge quantity; calculate a charge quantity correction value by using the first impact factor, the second impact factor, and the third impact factor; and correct an initial battery charge quantity by using the charge quantity correction value to obtain the target battery charge quantity, where the initial battery charge quantity is a preset battery charge quantity for exiting the pure electric drive mode.

In the embodiments of the present application, the acquisition module is configured to: acquire a first weight corresponding to the first impact factor, a second weight corresponding to the second impact factor, and a third weight corresponding to the third impact factor; calculate a first product of the first impact factor and the first weight; calculate a second product of the second impact factor and the second weight; calculate a third product of the third impact factor and the third weight; and determine the charge quantity correction value based on a sum value of the first product, the second product, and the third product.

In the embodiments of the present application, the apparatus further includes: a correction module, configured to: acquire an actual SoC value of a battery in the target vehicle, and calculate a target SoC value by using the actual SoC value; search a preset MAP table for a preset SoC value related to the target SoC value; calculate an SoC difference between the preset SoC value and the target SoC value; and correct an engine speed and an engine torque of the target vehicle by using the SoC difference.

In the embodiments of the present application, the correction module is configured to: compare the SoC difference with a preset SoC threshold; and if the SoC difference is greater than the preset SoC threshold, correct the engine speed and the engine torque based on a first correction parameter; or if the SoC difference is less than the preset SoC threshold, correct the engine speed and the engine torque based on a second correction parameter.

In the embodiments of the present application, the apparatus further includes: an adjustment module, configured to: acquire an initial SoC increase rate of the battery based on the SoC difference; acquire a maximum SoC increase rate and a minimum SoC increase rate; limit the initial SoC increase rate by using the maximum SoC increase rate and the minimum SoC increase rate to obtain a target SoC increase rate; and adjust the target SoC value according to the target SoC increase rate until the preset SoC value is reached.

Refer to FIG. 4. FIG. 4 is a schematic structural diagram of an electronic device according to an optional embodiment of the present application. As shown in FIG. 4, the electronic device includes one or more processors 10, a memory 20, and interfaces for connecting components, including high-speed and low-speed interfaces. The components are communicatively connected to each other by different buses and may be installed on a common motherboard or installed in other configurations as required The processor executes instructions within the electronic device, including instructions stored in or on the memory to display graphical information for a GUI on an external input/output apparatus (e.g., a display device coupled to the interfaces). In some optional embodiments, multiple processors and/or multiple buses may be employed with multiple memories when necessary. Similarly, multiple electronic devices may be connected, each providing part of necessary operations (e.g., as a server array, a blade server group, or a multiprocessor system).

The processor 10 may be a central processing unit, a network processor, or a combination thereof. The processor 10 may further include a hardware chip. The aforementioned hardware chip may be an application-specific integrated circuit, a programmable logic device, or a combination thereof. The programmable logic device may be a complex programmable logic device, a field-programmable gate array, a generic array logic, or any combination thereof.

The memory 20 has instructions executable by at least one processor 10 stored therein, enabling the at least one processor 10 to perform the methods shown in the aforementioned embodiments.

The memory 20 may include a program storage area and a data storage area. The program storage area may store an operating system and an application required for at least one function. The data storage area may store data created according to the use of an electronic device and the like. Moreover, the memory 20 may include a high-speed random access memory (RAM), and may further include a non-transitory memory, for example, at least one magnetic disk storage device, flash storage device, or other non-transitory solid state storage device. In some optional embodiments, the memory 20 optionally includes memories disposed remotely with respect to the processor 10. These remote memories may be connected to the electronic device by a network. An example of the foregoing network includes, but not limited to, the internet, an intranet, a local area network, a mobile communication network, and a combination thereof.

The memory 20 may include a volatile memory, for example, a random access memory; the memory may further include a non-volatile memory, for example, a flash memory, a hard disk drive, or a solid-state drive; and the memory 20 may further include a combination of the aforementioned types of memories.

The electronic device further includes a communication interface 30, configured to enable communication between the electronic device and another device or communication network.

Embodiments of the present application further provide a computer-readable storage medium. The methods according to the embodiments of the present application may be implemented in hardware or firmware, or may be implemented as computer code recorded on a storage medium, or implemented as computer code that is downloadable via a network, originally stored in a remote storage medium or non-transitory machine-readable storage medium, and subsequently stored in a local storage medium. Thus, the methods described herein may be processed by such software stored on a storage medium utilizing general-purpose computers, dedicated processors, or programmable/dedicated hardware. The storage medium may be a magnetic disk, an optical disc, a read-only memory, a random access memory, a flash memory, a hard disk drive, or a solid-state drive. Further, the storage medium may further include combinations of the aforementioned types of memories. It should be understood that computers, processors, microprocessor controllers, or programmable hardware include storage components capable of storing or receiving software or computer code. When accessed and executed by the computers, processors, or hardware, the software or computer code implements the methods illustrated in the above embodiments.

Although the embodiments of the present application are described in conjunction with the accompanying drawings, various modifications and variations may be made by those skilled in the art without departing from the spirit and scope of the present application, and such modifications and variations fall within the scope defined by the appended claims.

## Claims

1. A control method for drive modes of a vehicle, wherein the method comprises:
acquiring a target condition currently used by a target vehicle to determine whether to enter a pure electric drive mode, wherein the target condition is determined by using current vehicle parameters and environmental parameters of the target vehicle;
acquiring key parameters related to the target condition, and if the key parameters meet the target condition, controlling the target vehicle to enter the pure electric drive mode, and determining, based on the vehicle parameters and the environmental parameters, a target battery charge quantity for exiting the pure electric drive mode; and
if the target vehicle reaches the target battery charge quantity, controlling the target vehicle to exit the pure electric drive mode.

2. The method according to claim 1, wherein the step of acquiring a target condition currently used by a target vehicle to determine whether to enter a pure electric drive mode comprises:
detecting the vehicle parameters of the target vehicle and the environmental parameters of an environment in which the target vehicle is currently located, wherein the vehicle parameters at least comprise at least one of a battery state of health, a cell voltage, and a thermal management system status, and the environmental parameters comprise an ambient temperature and an altitude coefficient;
acquiring an initial condition used for determining whether to enter the pure electric drive mode, and extracting determination rules corresponding to key parameters in the initial condition; and
updating the determination rules corresponding to the key parameters by using the vehicle parameters and the environmental parameters to obtain the target condition.

3. The method according to claim 2, wherein the step of determining, based on the vehicle parameters and the environmental parameters, a target battery charge quantity for exiting the pure electric drive mode comprises:
determining a current battery status based on the battery state of health and the cell voltage, and acquiring a first impact factor of the current battery status on a battery charge quantity;
determining a current environmental status based on the ambient temperature and the altitude coefficient, and acquiring a second impact factor of the current environmental status on the battery charge quantity;
acquiring a third impact factor of the thermal management system status on the battery charge quantity;
calculating a charge quantity correction value by using the first impact factor, the second impact factor, and the third impact factor; and
correcting an initial battery charge quantity by using the charge quantity correction value to obtain the target battery charge quantity, wherein the initial battery charge quantity is a preset battery charge quantity for exiting the pure electric drive mode.

4. The method according to claim 3, wherein the step of calculating a charge quantity correction value by using the first impact factor, the second impact factor, and the third impact factor comprises:
acquiring a first weight corresponding to the first impact factor, a second weight corresponding to the second impact factor, and a third weight corresponding to the third impact factor;
calculating a first product of the first impact factor and the first weight;
calculating a second product of the second impact factor and the second weight;
calculating a third product of the third impact factor and the third weight; and
determining the charge quantity correction value based on a sum value of the first product, the second product, and the third product.

5. The method according to claim 1, wherein after the step of controlling the target vehicle to exit the pure electric drive mode, the method further comprises:
acquiring an actual SoC value of a battery in the target vehicle, and calculating a target SoC value by using the actual SoC value;
searching a preset MAP table for a preset SoC value related to the target SoC value;
calculating an SoC difference between the preset SoC value and the target SoC value;
and
correcting an engine speed and an engine torque of the target vehicle by using the SoC difference.

6. The method according to claim 5, wherein the step of correcting an engine speed and an engine torque of the target vehicle by using the SoC difference comprises:
comparing the SoC difference with a preset SoC threshold; and
if the SoC difference is greater than the preset SoC threshold, correcting the engine speed and the engine torque based on a first correction parameter; or if the SoC difference is less than the preset SoC threshold, correcting the engine speed and the engine torque based on a second correction parameter.

7. The method according to claim 5, wherein after the step of calculating an SoC difference between the preset SoC value and the target SoC value, the method further comprises:
acquiring an initial SoC increase rate of the battery based on the SoC difference;
acquiring a maximum SoC increase rate and a minimum SoC increase rate;
limiting the initial SoC increase rate by using the maximum SoC increase rate and the minimum SoC increase rate to obtain a target SoC increase rate; and
adjusting the target SoC value according to the target SoC increase rate until the preset SoC value is reached.

8. A control apparatus for drive modes of a vehicle, wherein the apparatus comprises:
a detection module, configured to acquire a target condition currently used by a target vehicle to determine whether to enter a pure electric drive mode, wherein the target condition is determined by using current vehicle parameters and environmental parameters of the target vehicle;
an acquisition module, configured to acquire key parameters related to the target condition, and if the key parameters meet the target condition, control the target vehicle to enter the pure electric drive mode, and determine, based on the vehicle parameters and the environmental parameters, a target battery charge quantity for exiting the pure electric drive mode; and
a control module, configured to: if the target vehicle reaches the target battery charge quantity, control the target vehicle to exit the pure electric drive mode.

9. The apparatus according to claim 8, wherein the detection module is configured to: detect the vehicle parameters of the target vehicle and the environmental parameters of an environment in which the target vehicle is currently located, wherein the vehicle parameters at least comprise at least one of a battery state of health, a cell voltage, and a thermal management system status, and the environmental parameters comprise an ambient temperature and an altitude coefficient; acquire an initial condition used for determining whether to enter the pure electric drive mode, and extract determination rules corresponding to key parameters in the initial condition; and update the determination rules corresponding to the key parameters by using the vehicle parameters and the environmental parameters to obtain the target condition.

10. The apparatus according to claim 9, wherein the acquisition module is configured to: determine a current battery status based on the battery state of health and the cell voltage, and acquire a first impact factor of the current battery status on a battery charge quantity; determine a current environmental status based on the ambient temperature and the altitude coefficient, and acquire a second impact factor of the current environmental status on the battery charge quantity; acquire a third impact factor of the thermal management system status on the battery charge quantity; calculate a charge quantity correction value by using the first impact factor, the second impact factor, and the third impact factor; and correct an initial battery charge quantity by using the charge quantity correction value to obtain the target battery charge quantity, wherein the initial battery charge quantity is a preset battery charge quantity for exiting the pure electric drive mode.

11. The apparatus according to claim 10, wherein the acquisition module is configured to: acquire a first weight corresponding to the first impact factor, a second weight corresponding to the second impact factor, and a third weight corresponding to the third impact factor; calculate a first product of the first impact factor and the first weight; calculate a second product of the second impact factor and the second weight; calculate a third product of the third impact factor and the third weight; and determine the charge quantity correction value based on a sum value of the first product, the second product, and the third product.

12. The apparatus according to claim 8, wherein the apparatus further comprises: a correction module, configured to: acquire an actual SoC value of a battery in the target vehicle, and calculate a target SoC value by using the actual SoC value; search a preset MAP table for a preset SoC value related to the target SoC value; calculate an SoC difference between the preset SoC value and the target SoC value; and correct an engine speed and an engine torque of the target vehicle by using the SoC difference.

13. The apparatus according to claim 12, wherein the correction module is configured to: compare the SoC difference with a preset SoC threshold; and if the SoC difference is greater than the preset SoC threshold, correct the engine speed and the engine torque based on a first correction parameter; or if the SoC difference is less than the preset SoC threshold, correct the engine speed and the engine torque based on a second correction parameter.

14. The apparatus according to claim 12, wherein the apparatus further comprises: an adjustment module, configured to: acquire an initial SoC increase rate of the battery based on the SoC difference; acquire a maximum SoC increase rate and a minimum SoC increase rate; limit the initial SoC increase rate by using the maximum SoC increase rate and the minimum SoC increase rate to obtain a target SoC increase rate; and adjust the target SoC value according to the target SoC increase rate until the preset SoC value is reached.

15. An electronic device, comprising:
a memory and a processor, wherein the memory and the processor are communicatively connected to each other, the memory has computer instructions stored therein, and the processor is configured to perform the method of any one of claims 1 to 7 by executing the computer instructions.

16. A computer-readable storage medium, wherein the computer-readable storage medium has computer instructions stored therein, and the computer instructions are configured to enable a computer to perform the method of any one of claims 1 to 7.
